# EUROPEAN PATENT APPLICATION

(11) **EP 4 803 457 A1**
(43) Date of publication of application: **09.09.2026**
(21) Application number: 25161413.7
(22) Date of filing: 03.03.2025
(51) Int. Cl.: B65G 47/90, B65G 1/04

(54) **A MANIPULATOR**

(71) Applicant: AutoStore Technology AS, 5578 Nedre Vats (NO)
(72) Inventor: AUSTRHEIM, Trond, 5578 Nedre Vats (NO); VISHNUBHATLA, Satya S, 5578 Nedre Vats (NO); GJERDEVIK, Øystein, 5578 Nedre Vats (NO)
(74) Representative: Kilburn & Strode LLP

(57) **Abstract**

The disclosure relates to a manipulator for handling items in an automated storage and retrieval system, wherein items are contained in a first container, and the first container is contained within a storage bin, the storage bin having a top opening, wherein the manipulator comprises: a first plate having a first flat surface, the first plate being movable in a direction perpendicular to the first flat surface, a second plate having a second flat surface, the second flat surface being parallel to and offset from the first flat surface, and the second plate being movable in a direction perpendicular to the second flat surface, wherein the first plate and the second plate are configured to move together to clamp a first container between the first plate and the second plate, and wherein the first plate and the second plate are configured to move in unison and parallel to the first flat surface and the second flat surface.

## Description

### TECHNICAL FIELD

The disclosure relates to a manipulator. More particularly, it relates to a manipulator for handling items in an automated storage and retrieval system.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

When the storage bins are to be processed for any reason, the goods, items, or containers within the storage bin must usually be lifted out of the storage bin. Sometimes, the goods are presented at the top of the bin by moving an inner plate upwards such that the goods are on a top flat surface of the storage bin. In any case, there is a human or machine burden in manipulating the goods stored in a storage container to remove them from the storage container for processing, or to place the goods in the storage bin to be further processed or stored.

In some cases, goods from storage bins may be removed from or placed into storage bins by manipulators which push the goods using a plate, or otherwise grab those goods using robotic arms. In any case, such pushing of goods may risk compromising the goods by applying too much pressure in pushing. Robotic arms that grab goods may suffer from the same flaws, or they may include complex pressure sensors and control to carefully manipulate goods. It will be appreciated that systems which can simply, and automatically manipulate goods, and fragile items with care and low pressure may improve up time of automated storage and retrieval systems because damage to goods may lead to leakages, or debris in the system.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5 shows a manipulator for handling items;
Fig. 6 shows the manipulator of Fig. 5;
Fig. 7 shows the manipulator of Fig. 5;
Fig. 8 shows the manipulator of Fig. 5;
Fig. 9 shows the manipulator of Fig. 5;
   Fig. 10 shows the manipulator of Fig. 5.

### DETAILED DESCRIPTION

In overview, the disclosure relates to a manipulator for handling items in an automated storage and retrieval system, including a first plate and a second plate. The first and second plates are configured to grip or clamp the goods, items, or containers in the storage bin from opposing sides, but together the manipulator moves the goods, items, or containers in a different direction to the clamping direction. In this way, the first plate and the second plate may guide the goods, items, or containers as they are otherwise gently moved in another direction such as on a conveyor.

### Automated storage and retrieval system overview

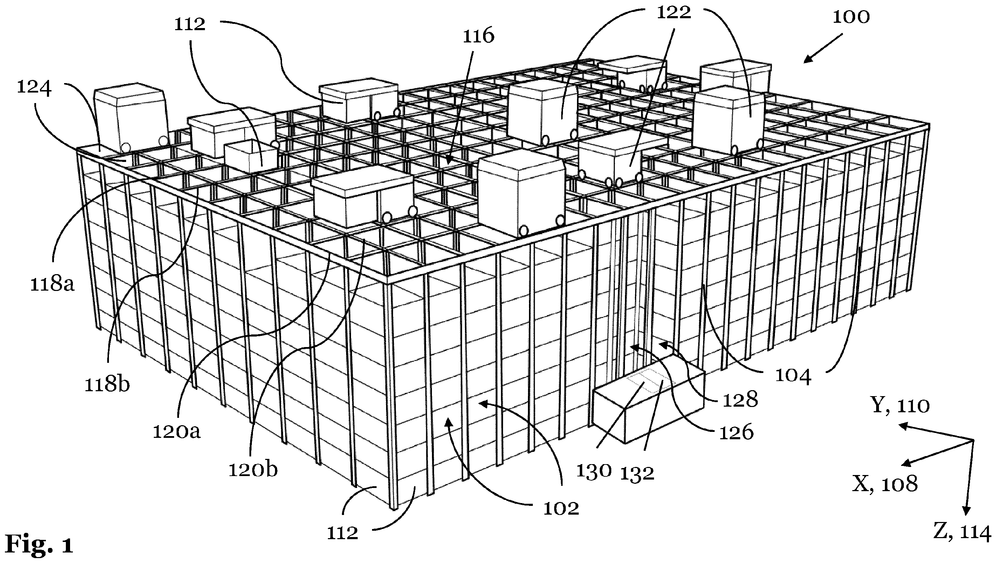

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off') and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

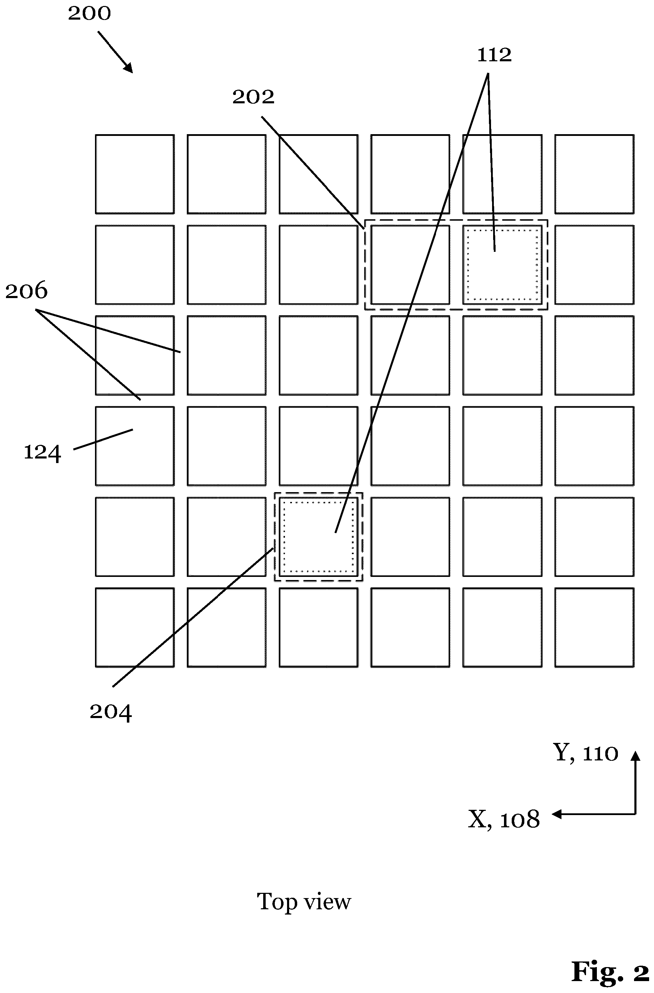

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

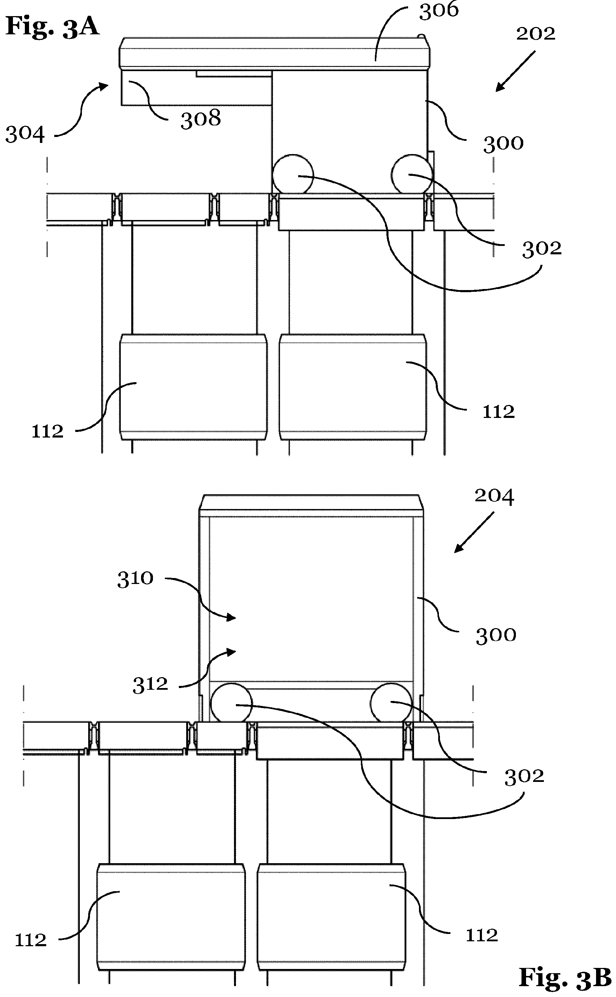

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

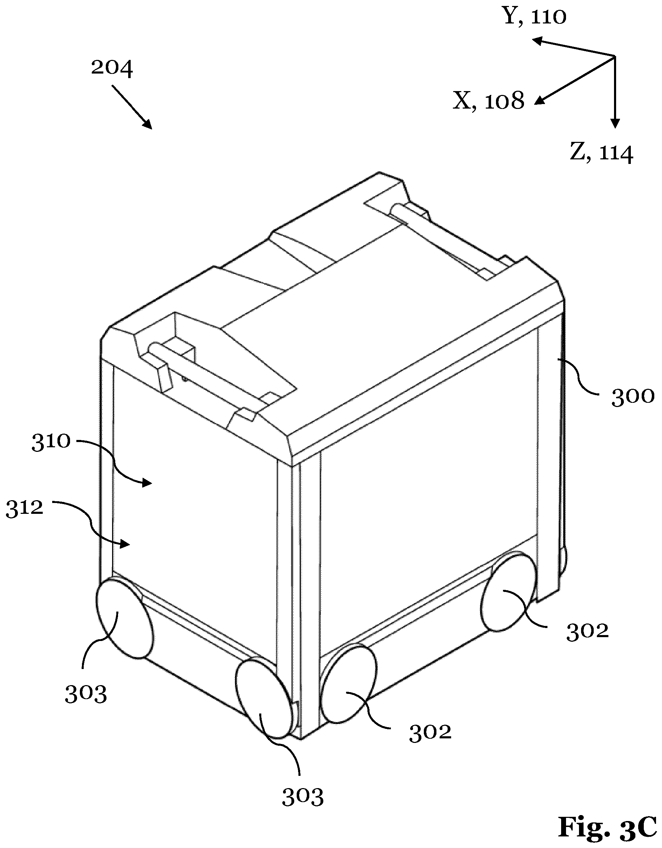

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

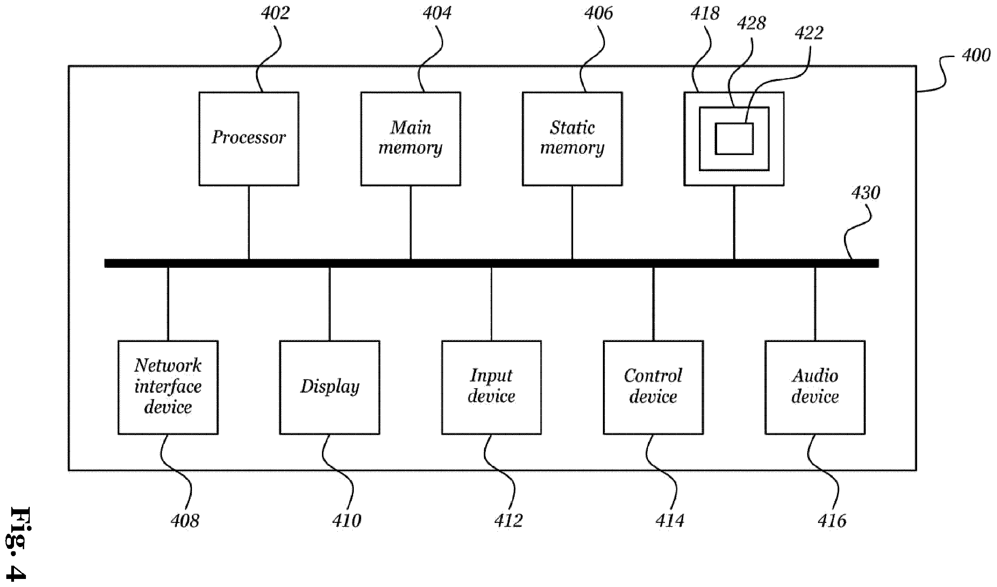

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which may be marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Description of specific improvements

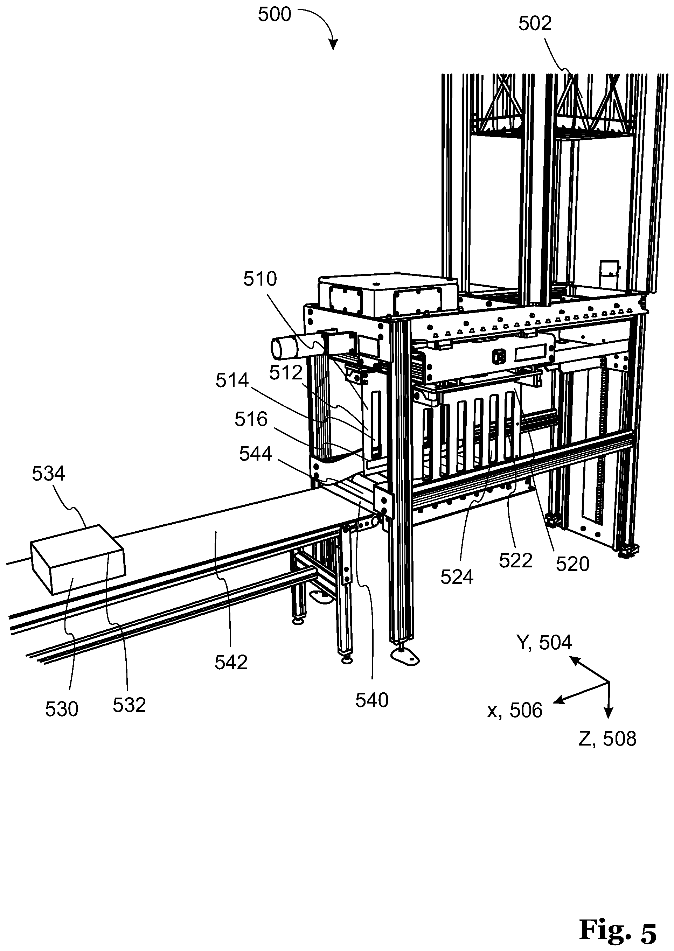

Fig. 5 shows a manipulator 500 for handling items in an automated storage and retrieval system as described herein. As shown in Fig. 5, a storage bin 502 may be provided from a grid 100 of a storage system, such as the grid 100 shown in Fig. 1. The storage bin 502 is shown in Fig. 5 as descending into the manipulator 500, however, the storage bin 502 may arrive at the manipulator 500 from other directions, such as from any side of the manipulator 500, or indeed from below the manipulator 500. The manipulator 500 comprises a first plate 510. The first plate 510 is shown having a first flat surface 512. The first plate 510 is further shown in Fig. 5 having a plurality of cut-outs 514. The first plate 510 may not include the plurality of cut-outs 514 and instead may be a substantially contiguous plate. Additionally shown in the embodiment of Fig. 5, the first plate 510 may comprise a first grip 516. The first grip 516 may be a protrusion on the first flat surface 512, or the first grip 516 may be a separate component attached to the first flat surface 512 and protruding from the first flat surface 512. The first grip 516 may comprise a reinforcing material and/or the first grip 516 may comprise a high friction material. High friction material refers to the material type being one that exhibits a greater friction coefficient with other materials than the material of the first plate 510. For example, where the first plate 510 may comprise steel or aluminium, the first grip 516 may comprise paint, silicone, or a rough or knurled surface.

Fig. 5 also shows that the manipulator 500 comprises a second plate 520. The second plate 520 is shown having a second flat surface 522. The second plate 520 is further shown in Fig. 5 having a plurality of cut-outs 524. The second plate 520 may not include the plurality of cut-outs 524 and instead may be a substantially contiguous plate. Additionally shown in the embodiment of Fig. 5, the second plate 520 may comprise a second grip (not visible). The second grip may be a protrusion on the second flat surface 522 similar to the first grip 516 on the first flat surface 512, or the second grip may be a separate component attached to the second flat surface 522 and protruding from the second flat surface 522. The second grip may comprise a reinforcing material and/or the second grip may comprise a high friction material. High friction material refers to the material type being one that exhibits a greater friction coefficient with other materials than the material of the second plate 520. For example, where the second plate 520 may comprise smooth finish steel or aluminium, the second grip may comprise paint, silicone, or a rough or knurled surface.

The first plate 510 and the second plate 520 are parallel to one another and offset from each other in a first, Y, direction 504. The first plate 510 and the second plate 520 are each movable or actuatable in the first, Y, direction 504 shown in Fig. 5. In this way, the first plate 510 and the second plate 520 may be moved inwardly towards each other, or the first plate 510 and the second plate 520 may be moved apart from each other. The first plate 510 and the second plate 520 may be moved independently or together. Where the first plate 510 and the second plate 520 are both moved inwardly toward each other, the first plate 510 and the second plate 520 may come together to clamp a container, such as container 530 in Fig. 5. The container 530 is shown as a box having at least two opposite sides 532, 534. The two opposite sides of the container 530 are substantially parallel to one another, such that when the first plate 510 and the second plate 520 come together to clamp the container 530, the container 530 may be securely held or guided with the first plate 510 and the second plate 520. Whilst a box has been shown, the container 530 may be in many different forms suitable for being contained in the storage bin 502. For example, the container 530 may comprise a plurality of items wrapped together, such as being tightly wrapped in shrink wrap (for example drinks bottles), or securely contained in a tray. In any case, the container 530 may include a first side 532 and a second side 534 which are substantially parallel and opposite to one another so as to be clamped between the first plate 510 and the second plate 520.

Once the first plate 510 and the second plate 520 have been moved together to clamp the container 530, the first plate 510 and the second plate 520 may move together in unison and parallel to the first flat surface 516 and the second flat surface. That is, once the first plate 510 and the second plate 520 have moved together in opposite directions in line with the first direction 504, the first plate 510 and the second plate 520 may move together in either the second, X, direction 506, the third, Z, direction 508, or in any combination of the first 504, second 506, and third 508 directions. Once the first plate 510 and the second plate 520 are clamping the first container 530, the first plate 510 and the second plate 520 may move together to guide the container 530 in any direction. This may achieve guiding the container 530 in the second direction 506 along a conveyor 540. The conveyor 540 may comprise a plurality of driven rollers 544, and optionally the conveyor 540 may comprise a conveyor belt 542. Any suitable combination of driven rollers 544 and conveyor belts 542 may be combined to create a conveyor 540 which acts to drive the container horizontally. Thus, in combination with the first plate 510 and the second plate 520, the conveyor may drive the container 530 horizontally in the second direction 506, whilst the first plate 510 and the second plate 520 act to guide the container 530. For example, the first plate 510 and the second plate 520 may be configured to move in the second direction 506 at the same velocity at which the conveyor 540 is driving the container 530 in the second direction 506. Thus the conveyor 540 imparts the force which moves the container 530, whereas the first plate 510 and the second plate 520 do not impart a horizontal force on the container 530. Alternatively, the first plate 510 and the second plate 530 may also impart a driving force on the container 530 such that the conveyor 540 and the first plate 510 and the second plate 520 all impart some horizontal force to drive the container.

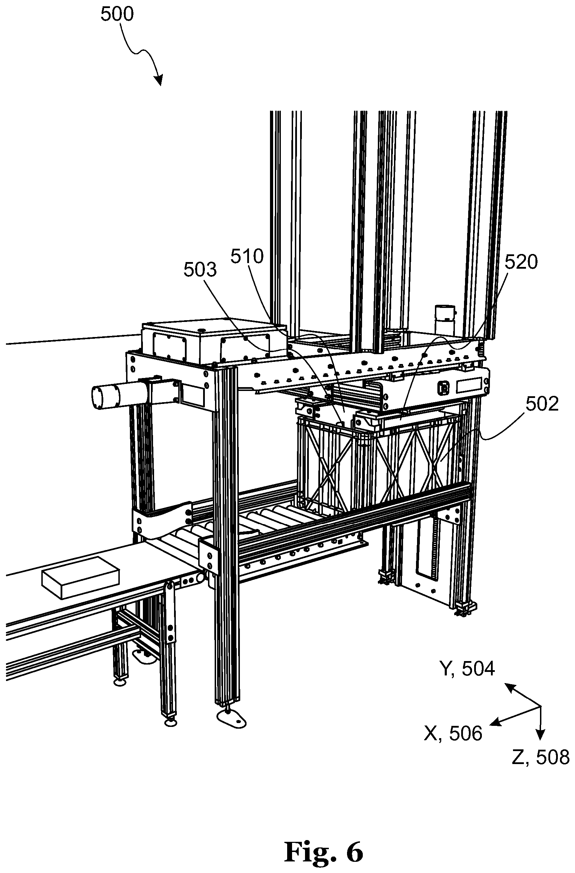

Now, turning to Fig. 6, it will be appreciated that the first plate 510 and the second plate 520 may additionally or alternatively be moved together in the third, Z, direction 508. This is shown as the vertical direction in Fig. 6. By moving the first plate 510 and the second plate 520 in the vertical direction, a container 530 may be lowered into, or lifted out of a storage bin 502. Where the first plate 510 and the second plate 520 are moving to lift or lower a container 530, the first plate 510 and the second plate 520 are clamped together with a force sufficient to support the weight of the container 530 from the sides 532, 534 of the container 530. The storage bin 502 is shown in Fig. 6 in a position where the storage bin 502 has been raised from below, and the first plate 510 and the second plate 520 are extending into the storage bin 502 through an opening 503 of the storage bin. The first plate 510 and the second plate 520 extend inside the storage bin 502 down each side of the container (not visible in Fig. 6 in the storage bin 502). Once the first plate 510 and the second plate 520 have been moved together in the first direction 504 to clamp onto the container, either the storage bin 502 may be lowered to lift the container out of the storage bin 502, or the first plate 510 and the second plate 520 may be lifted upwards to lift the container out of the storage bin 502.

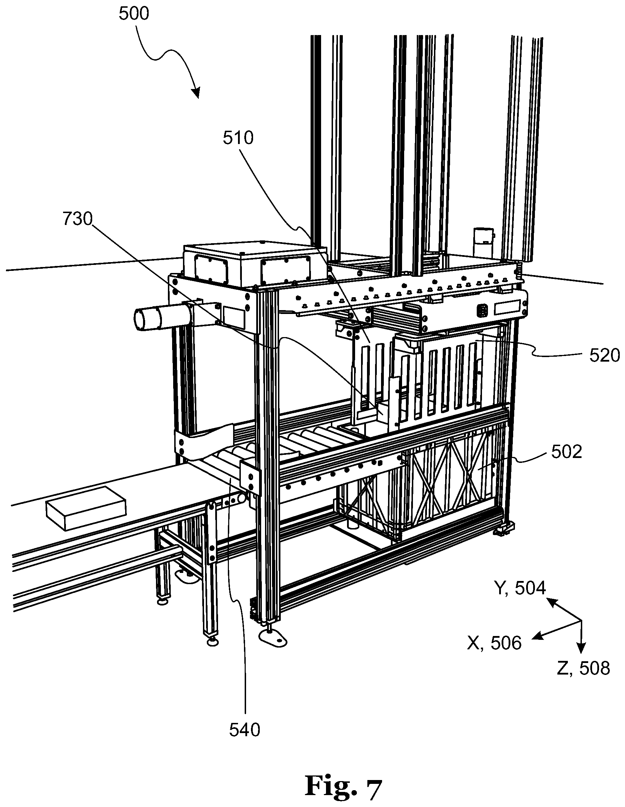

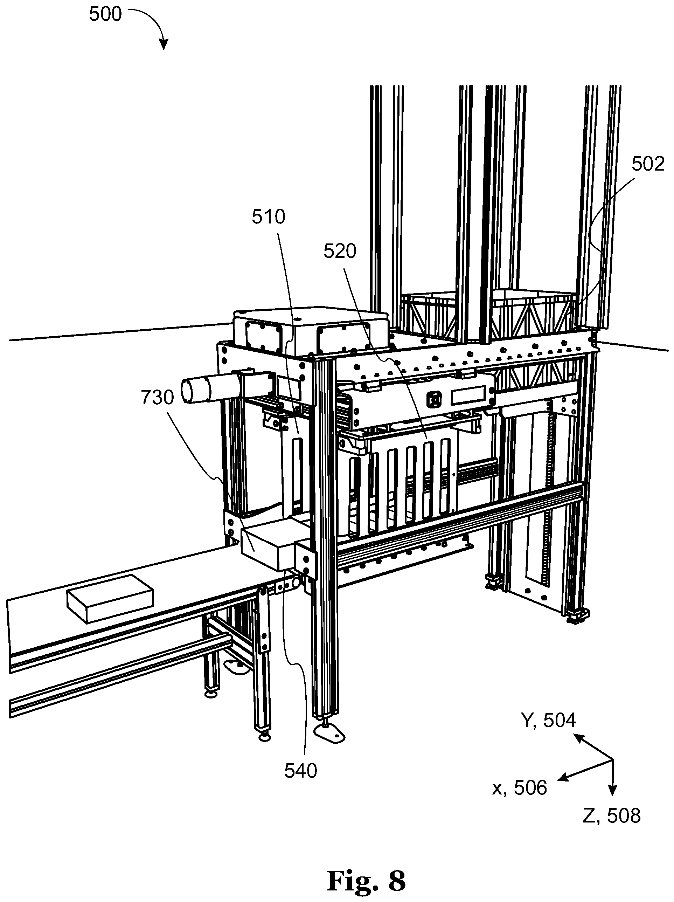

Fig. 7, shows the manipulator 500 of Fig. 6 in which the storage bin 502 has been lowered so that the container 730 is lifted out of the storage bin 502. Once the container 730 has been lifted out of the storage bin 502, the first plate 510 and the second plate 520 may be moved horizontally in the second direction 506 to carry the container 730 to the conveyor, as shown in Fig. 8. Fig. 8 shows where the container 730 has been carried to the conveyor 540 by the first plate and the second plate 520, and has subsequently been released by the first plate 510 and the second plate 520 by moving the first plate 510 and the second plate 520 apart from each other in the first direction 504. The container 730 may now be carried by the conveyor 540, away from the manipulator 500 so that it may be further processed. For example, the container may be carried elsewhere for shipping, items may be removed from the container 730. Once the container 730 has been removed from the storage bin 502, the storage bin 502 is free to be returned elsewhere, or to be used to contain other containers. The storage bin 502 in Fig. 8 is shown being lifted away to be returned to the storage grid.

It will further be appreciated that containers, such as container 730 may be placed into storage bins such as storage bin 502 by reversing the process of lifting the container 730 out of the storage bin 502. For example, the container 730 shown in Fig. 8 may be moved into the space between the first plate 510 and the second plate 520, the second plate 520 and the first plate 510 being moved together to clamp the container 730. As shown in Fig. 7, the container 730 may be moved horizontally whilst being clamped and guided by the first plate 510 and the second plate 520 to a position above the storage bin 502. Then, as shown in Fig. 6, the first plate 510 and the second plate 520 may either be lowered into the storage bin 502, or the storage bin 502 may be raised upwards such that the first plate 510 and the second plate 520 may be moved apart to no longer clamp the container 730. The storage bin 502 may then be moved to the storage grid, away from the manipulator 500, for storage or further processing elsewhere.

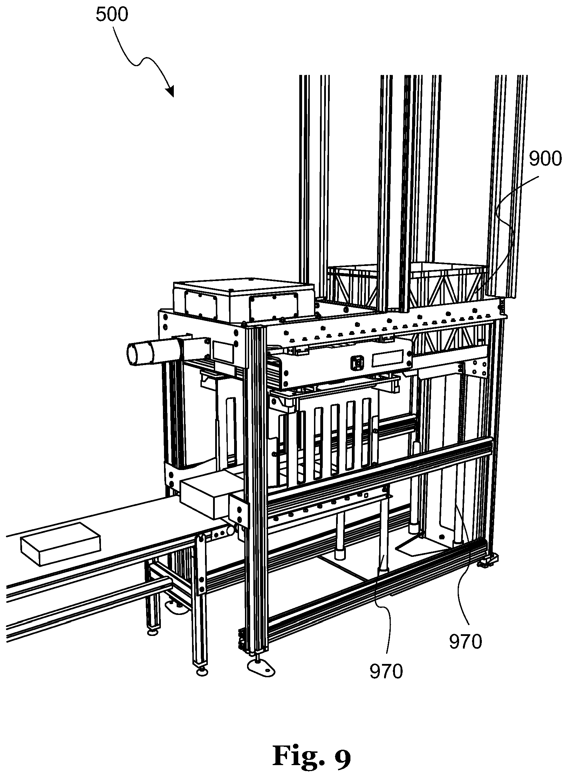

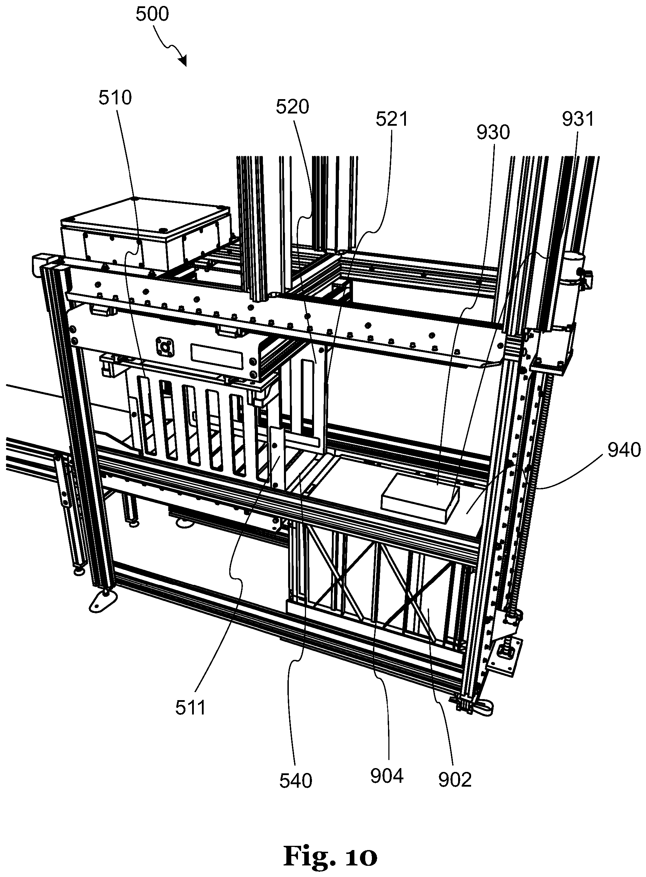

Fig. 9 shows the manipulator 500, further including optional components for handling storage bins that have movable inner plates. As shown in Fig. 9, a storage bin 902 has arrived at the manipulator 500, which has a movable inner plate. The manipulator 500 thereby engages support posts 970 which extend upwardly to engage the movable inner plate of the storage bin 902. As the storage bin 902 is lowered onto the support posts 970, the support posts 970 support the inner plate 940 as shown in Fig. 10. The inner plate 940, resting on the support posts 970, stays level with the conveyor 540 whilst the storage bin 902 continues to be lowered below the conveyor 540. In this way, the container 930 may be presented above the walls 904 of the storage bin 902 to be clamped by the first plate 510 and the second plate 520. The first plate 510 and the second plate 520 may operate as described herein with reference to Figs. 5 to 7, however, when the storage bin 930 having the movable inner plate 940 is used, there is no requirement for the first plate 510 and the second plate 520 to extend into the storage bin, and there is no requirement for the first plate 510 and the second plate 520 to clamp the container 930 with sufficient pressure so as to overcome the weight of the container 930. Rather, the first plate 510 and the second plate 520 may be clamped onto the container 930 with a pressure sufficient only to guide the container 930 to be moved horizontally. Once the storage bin 902 having the movable inner plate 940 is returned from the manipulator 500, the support posts 970 may either remain in place to support further storage bins 902, or the support posts 970 may be moved out of place so that storage bins having a fixed bottom may be engaged by the manipulator 500. It will be appreciated that the posts 970 may be permanently fixed so that the manipulator 500 is only compatible with storage bins having movable inner plates, or the posts may be selectively engageable, such that the manipulator is compatible with either type of storage bin. Alternatively, no storage posts 970 may be included in the manipulator 500 at all.

Also with reference to Fig. 10, there is provided a first arm 511 located on the first plate 510, and a second arm 521 located on the second plate 520. The first arm 511 and the second arm 521 may each protrude inwardly (i.e. toward one another), such that they provide additional horizontal support to any container 930. For example, as shown in Fig. 10, the first arm 511 and the second arm 521 protrude inwardly from the first plate 510 and the second plate 520 respectively such that when the first plate 510 and the second plate 520 are clamped onto the container 930, they may selectively engage with an end 931 of the container 930. In this way, when the manipulator 500 guides the container 930 horizontally by moving the first plate 510 and the second plate 520 in unison, should there be any slippage of the container 930, such as from slow or ineffective conveyor 540, the first arm and the second arm 521 may engage the end 931 of the container 930 and push it along the conveyor 540.

### Penultimate comments

Whilst the term "flat surface" has been used throughout to describe a surface which is shown as being perfectly flat in the figures, it will be appreciated that the term flat will apply to surfaces which are flat so much as they provide the intended effect of engaging and guiding containers. For example, a flat surface may be substantially flat such that it engages the container, but also include protrusions, undulations, or other apparent defects to a perfectly flat surface without compromising the technical implementation of the manipulator. Such surfaces which are substantially flat and provide the effect of the manipulator are intended to be covered by this disclosure.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A manipulator for handling items in an automated storage and retrieval system, wherein items are contained in a first container, and the first container is contained within a storage bin, the storage bin having a top opening, wherein the manipulator comprises:
a first plate having a first flat surface, the first plate being movable in a direction perpendicular to the first flat surface,
a second plate having a second flat surface, the second flat surface being parallel to and offset from the first flat surface, and the second plate being movable in a direction perpendicular to the second flat surface,
wherein the first plate and the second plate are configured to move together to clamp a first container between the first plate and the second plate, and wherein the first plate and the second plate are configured to move in unison and parallel to the first flat surface and the second flat surface.

2. The manipulator according to claim 1, wherein the first plate and the second plate are configured to move in unison, parallel to the first flat surface and the second flat surface, and horizontally such that the first container is guided in horizontal movement.

3. The manipulator according to claim 1 or claim 2, wherein the first plate and the second plate are configured to move in unison, parallel to the first flat surface and the second flat surface, and vertically into and/or out of the storage bin so as to lift the first container out of the storage bin and/or lower the first container into the storage bin.

4. The manipulator according to any preceding claim, wherein the first plate includes a first grip and the second plate includes a second grip, and wherein the first grip and the second grip are configured to engage opposite sides of the first container, and optionally wherein the first grip and the second grip each comprise a high friction coating.

5. The manipulator according to any preceding claim, wherein the first plate comprises a first arm and the second plate comprises a second arm, and wherein the first arm and the second arm protrude inwardly towards each other.

6. The manipulator according to claim 5, wherein the first arm and the second arm are configured to abut a first side of the first container, the first side of the first container being perpendicular to the first flat surface and perpendicular to the second flat surface.

7. The manipulator according to any preceding claim, further comprising a conveyor configured to support the first container from below and to move the first container horizontally and in a direction parallel to the first flat surface and the second flat surface.

8. The manipulator according to claim 7, wherein the conveyor comprises a set of powered rollers, and/or wherein the conveyor comprises a powered conveyor belt.

9. An automated storage and retrieval system, comprising the manipulator of any preceding claim, the first container, and the storage bin.

10. The automated storage and retrieval system of claim 9, wherein the first container is a box having at least two parallel opposed sides.

11. A method of manipulating items in an automated storage and retrieval system comprising:
providing items in a first container
providing a storage bin for containing the first container
providing a first plate having a first flat surface, and moving the first plate in a direction perpendicular to the first flat surface to engage the first plate with a first side of the first container
providing a second plate having a second flat surface, and moving the second plate in a direction perpendicular to the second flat surface to engage the second plate with a second side of the first container, the second side of the first container being opposite the first side of the first container
moving the first container in a direction parallel to the first flat surface and the second flat surface, and
moving the first plate and the second plate in unison with the first container to guide the container.

12. The method of claim 11, wherein moving the first container is done by supporting the first container with a conveyor, and optionally powering the conveyor to impart motion on the first container.

13. The method of claim 11 or claim 12, wherein moving the first container is done by moving the first plate and the second plate in unison and parallel to the first flat surface and the second flat surface to impart motion on the first container.

14. The method of claim 13, wherein the first plate and the second plate are gripped together such that the first container is lifted out of or lowered into the storage bin.
